# EUROPEAN PATENT APPLICATION

(11) **EP 1 084 938 A2**
(43) Date of publication of application: **21.03.2001**
(21) Application number: 00307998.5
(22) Date of filing: 14.09.2000
(51) Int. Cl.: B62D 25/20, B62D 21/09

(54) **Structural elements**

(30) Priority: 15.09.1999 GB 9921851
(71) Applicant: YOUNGFLEX A.G., 6300 Zug (CH)
(72) Inventor: Scott, Terry, Reading, Berkshire RG7 3RQ (GB); Andersson, Peter, Porthcawl, Mid Glamorgan CF36 3JE (GB)
(74) Representative: Bubb, Antony John Allen

(57) **Abstract**

A structural element intended to serve as an interface between the floor of a vehicle and structural elements such as the frames of seats to be secured within the vehicle comprises a layer of material (1) that is shaped to provide, on each surface, a pattern raised portions (2) and recessed portions (3) interconnected by oblique wall portions (4). Fastening studs (6) extend from the faces of selected raised portions (2) on both sides of the elements (1) so that the studs (6) on one face of the panel may be secured to a vehicle floor, whereas the studs (6) extending from the other face of the panel may serve to support vehicle seat mountings, (8) to be secured within the vehicle. Thus the structural element serves as an interface between the floor of the vehicle and seat mountings (8) to be secured thereto.

## Description

This invention concerns improvements in and relating to structural elements, and, more especially, to a structural element intended for use as a reinforcement for a vehicle floor in order to incorporate a convenient mounting for the attachment of vehicle seats or other assemblies.

Vehicles such as mini-buses are conventionally provided by constructors who provide vehicle seating within the shell of a vehicle provided by an original manufacturer. As is well known, it is conventional for original vehicle manufacturers to design commercial vehicles that are sold for the transportation of goods in such a manner that the vehicle can readily be converted to a passenger carrying vehicle or mini-bus, by the insertion of windows and internal seating.

Since the floors of luggage carrying vehicles are not primarily adapted for the direct receipt of vehicle seats, conversion of such a vehicle involves the need to adapt the floor of the vehicle to receive seats in such a manner that seats installed in the vehicle are capable of meeting the requisite safety standards designed to ensure that the seating will adequately withstand loads that might arise thereon in the event of an accident involving collision of the vehicle.

Hitherto, this has involved the reinforcement of the floor of the vehicle by means of a sub-frame, for example of welded steel tube, that may be positioned above or below the floor of the vehicle and serves to distribute load between the mountings of vehicle seats that are attached to the sub-frame, and the floor of the vehicle to which the sub-frame is itself attached. Hitherto known constructions of this nature have proved relatively complicated to install as well as requiring the use of significant additional steel stock to form the frame for reinforcing the floor, with a consequent penalty in the overall weight of the vehicle.

It is accordingly an object of the present invention to provide an improved means capable of simplifying the problem of equipping a vehicle with a desired arrangement of internal seats.

In accordance with the present invention there is provided a structural element comprising an layer of material of which adjacent areas are relatively displaced such that they lie in respective ones of two spaced apart parallel planes, whereby each face of the element displays a regular array of raised portions bounded by recesses, the raised portions at one face of the element corresponding to the recesses on the other, and the arrangement being such that with raised portions at one face of the element secured at selected positions to the face of a structural element such as a vehicle floor, the raised portions at the other face of the element provide mounting points at which may be secured structural members, such as the frames of vehicle seats, the structural element serving to transmit forces between the mounting points located at its respective faces.

Advantageously, each raised portion of the structural element may be adapted to receive, as a press in fit, a blind fastening means such as a stud or bolt.

A structural element in accordance with the invention is capable of providing an interface between a vehicle floor and mountings for seating or other assemblies, in such a manner that there may be safely transmitted to the vehicle floor loads greater than that which could be sustained by seats bolted directly to the vehicle floor itself.

Moreover, since the element is effectively in the form of a sheet material, it can readily be installed within the vehicle, above the existing vehicle floor, in order to provide a load bearing internal surface. If a flat floor is desired, an additional covering panel can be arranged over the recessed surface of the structural element itself. Any such additional panel may be provided between the surface of the structural element and the seat mountings, and may be designed to give additional structural support to the floor.

A structural element in accordance with the invention may be formed from pressed sheet metal, or by moulding from a synthetic material such as a high density, closed-cell, foamed polyurethane compound. Such compounds are currently known which have a strength equal to or exceeding that of steel.

Further preferred features and advantages of the invention will become apparent from the following description taken in conjunction with the accompanying drawings, in which:
FIGURE 1 is a perspective view of a structural element in accordance with the invention;
FIGURE 2 is a sectional elevation of the structural element of Fig. 1, shown in position on a vehicle floor and with associated fastening means;
FIGURE 3 is an enlarged fragmentary view showing a detail of Fig. 2,
FIGURE 4 is an enlarged view of a fastening means as shown in Fig. 2, and
FIGURE 5 is a sectional elevation of another embodiment of structural element, shown with modified forms of fastening means.

Referring to the drawings, a structural element is illustrated by way of example as one embodiment of the invention and comprises a substantially rigid sheet 1 which is shaped to provide, on each surface, a chequer-pattern of raised portions 2 and recessed portions 3 interconnected by oblique wall portions 4. The raised portions 2 and recessed portions 3 are of square or rectangular configuration and are arranged symmetrically so that the raised portions 2 and recessed portions 3 on one surface correspond to identical recessed portions 3 and raised portions 2 on the other surface, with the sheet material being of generally uniform wall thickness.

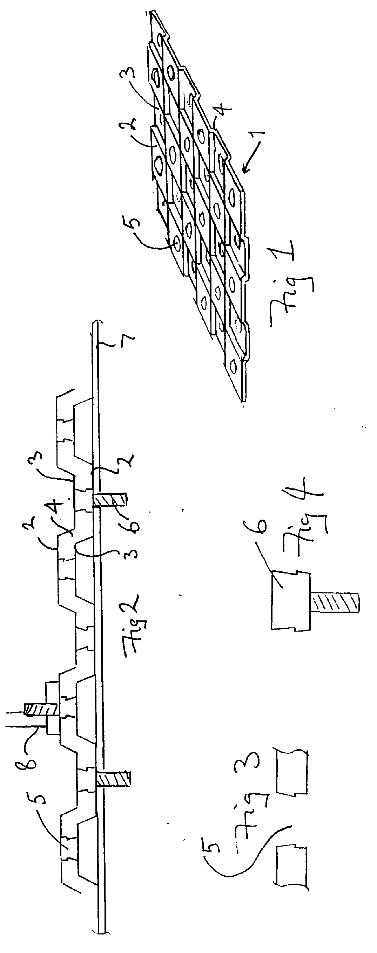

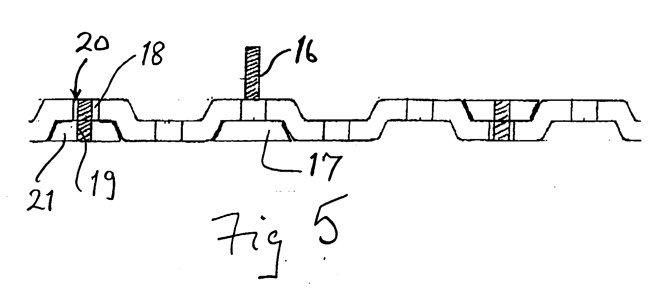

As shown more clearly in Fig. 2, opposing wall portions 4 define, together with the intermediate planar portion of the panel, a trapezium shape.

As also apparent from Fig. 2, the arrangement is preferably such that the bases of the recesses 3 on opposite sides of the panel lie in approximately the same plane.

The panel 1 comprises a plurality of apertures 5 arranged at the centre of each raised portion 2 and recessed portion 3, which, as shown more clearly in Figs. 3 and 4, are shaped to receive fastening studs 6 as a snap in fit. Thus, the structural element may be secured to a vehicle floor 7, as shown in Fig. 2, by providing studs 6 at selected points to enable the structural element to be screwed to the vehicle floor. Since the structural element is of modular construction, the positioning of holes in the vehicle floor to receive the studs 6 can be effected in a simple manner by the use of an appropriate template. The element 1 may be preformed to the outline of a given vehicle floor, or, may be cut to a desired shape from sheet stock.

Studs 6 may likewise be positioned selectively within apertures of the upwardly facing raised portions 2, to receive vehicle seat mountings 8 as shown in Fig. 2.

By virtue of the illustrated geometrical construction of the structural element 1, it provides an interface between the vehicle floor 7 and seat mountings 8 that will adequately resist loads placed on seating in accordance with currently required safety standards, and is capable of being formed in a simple and inexpensive manner, for example by moulding from appropriate synthetic plastics material.

Whilst the arrangement illustrated shows one embodiment of the invention, it will be appreciated that various modifications and alterations may be made without departing from the scope of the invention as claimed. Thus, although the illustrated chequer-pattem of the element 1 is based upon a configuration of squares, another geometrical pattern providing a regularly recurring arrangement of reinforcing walls 4, such as a hexagonal pattern, might also be adopted. The raised portions or recesses might also be circular or conical, in which case the respective margins of the raised portions or recesses are joined in a central plane of the panel by areas which surround and interconnect the adjacent circular margins.

It will also be appreciated that the dimensions of the individual portions 2 and 3, the wall thickness of the element 1, and the depth of the recessed portions 3 may be varied in accordance with requirements and the structural characteristics of the material from which the element is formed.

Furthermore, although the embodiment of Figs. 1-4 shows one possible arrangement of captive fastening means 6, other forms of fastening means may be provided as appropriate. Also, although not illustrated in the drawing, it will be appreciated that threaded fastening means of the kind illustrated may be appropriately adapted to prevent rotation of the fastenings within the apertures 5. For example, as shown in Fig. 5 the snap-in studs 6 may be replaced by studs 16, having mushroom shaped heads 17 that fill the recessed portions of the panel and thus serve to spread the load of the fastening over the opposite side of the panel. The mushroom heads 17 may be formed integrally with the studs 16, or may be fabricated, for example as a sheet metal pressing riveted to the stud and shaped to fit the underside of the recess. A composite construction wherein the stud 16 is provided with a mushroom head of synthetic plastics material moulded around an appropriately shaped head of the stud, would, in principle, also be possible.

Where it is preferred to make attachment to the structural element by means of bolts engaging the element, rather than nuts to be assembled on to the studs 16, studs 16 may be replaced by similarly shaped nuts 18 providing a threaded bore 19 for engagement by a securing bolt. The nuts 18 comprise a threaded sleeve portion 20 that is a push fit within the structural element 1, and a mushroom head 21 attached to the sleeve 20 in a manner similar to that described above for the stud 16. It will be appreciated that, where the recesses in the structural element are non-circular, the mushroom heads of the studs or nuts will be correspondingly shaped and thus be secured against rotation relatively to the structural element. Other means of preventing rotation of the nut or stud might also be employed, including the incorporation in the nut or stud of means that are deformable under tension applied to the stud, or otherwise adapted to interlock with the structural element by deformation of the material thereof.

The interface provided by the structural element described above provides a novel arrangement for the mounting of seats or other structural elements onto a vehicle floor.

The design of the interface allows it to be fitted to the top surface of the floor for easier fitting. The multiple hole design can be utilised to create a pattern of fixings that will spread the load across the floor and maximise the use of the vehicle chassis or its proximity for extra strength. It can be moulded in sheets and cut to size using a template. The cutting template can be also be used to position the fixings.

Minibuses use various arrangements of seats on each chassis and other structures have to have a peculiar design to support each seat arrangement. The design of this structure is unchanged from seat arrangement to seat arrangement and vehicle to vehicle. The different vehicles and seat arrangements just have a different pattern of nuts or bolts. Other structures often need extra support and sound deadening when a false floor is fitted on top to finish the vehicle. The design of this interface does not need extra support for the false floor and it is self sound deadening. This makes the height of the false floor closer to the actual floor than on other structures thus losing less head room.

## Claims

1. A structural element comprising a layer of material of which adjacent areas are relatively displaced such that they lie in respective ones of two spaced apart parallel planes, whereby each face of the element displays a regular array of raised portions bounded by recesses, the raised portions at one face of the element corresponding to the recesses on the other, and the arrangement being such that with raised portions at one face of the element secured at selected positions to the face of a structural element such as a vehicle floor, the raised portions at the other face of the element provide mounting points at which may be secured structural members, such as the frames of vehicle seats, the structural element serving to transmit forces between the mounting points located at its respective faces.

2. A structural element according to Claim 1, wherein each raised portion of the structural element is adapted to receive, as a press in fit, a blind fastening means such as a stud or bolt.

3. A structural element according to Claim 1 or 2, wherein the element is secured to a vehicle floor to provide an interface between the vehicle floor and mountings for seating or other assemblies.

4. A structural element according to Claim 3, wherein the element is secured above the existing vehicle floor in order to provide a load bearing internal surface.

5. A structural element according to Claim 4, wherein a covering panel is arranged over the recessed surface of the structural element.

6. A structural element according to any one of Claims 1-5 formed from pressed sheet metal.

7. A structural element according to any one of Claims 1-5, moulded from a synthetic material.

8. A structural element according to Claim 7, wherein the moulded synthetic material comprises a high density, closed cell, foamed polyurethane compound.

9. A structural element according to any one of Claims 1-8, wherein fastening means such as studs or bolts are secured to said element in such a manner that they extend from selected raised portions at both faces of the said element.

10. A structural element according to Claim 9, wherein said fastening means at one face of the said element are secured to a vehicle floor and said fastening means at said other face of the said element are secured to frames of vehicle seats, whereby said element serves as an interface between the vehicle floor and seats secured thereto.
